# EUROPEAN PATENT APPLICATION

(11) **EP 3 157 015 A1**
(43) Date of publication of application: **19.04.2017**
(21) Application number: 15806127.5
(22) Date of filing: 11.06.2015
(51) Int. Cl.: G21D 1/00, G21C 15/247

(54) **NUCLEAR POWER PLANT AND DEVICE FOR FEEDING A COVER GAS INTO THE PLANT**

(30) Priority: 11.06.2014 RU 2014123854
(71) Applicant: Joint Stock Company "Akme-Engineering", Moscow 115035 (RU)
(72) Inventor: MARTYNOV, Petr Nikiforovich, Obninsk, Kaluzhskaya obl. 249030 (RU); ASKHADULLIN, Radomir Shamilievich, Obninsk, Kaluzhskaya obl. 249030 (RU); GULEVSKIY, Vitaliy Alekseevich, Obninsk, Kaluzhskaya obl. 249032 (RU); UL'YANOV, Vladimir Vladimirovich, Obninsk, Kaluzhskaya obl. 249032 (RU); TEPLYAKOV, Yuriy Aleksandrovich, Obninsk, Kaluzhskaya obl. 249030 (RU); FOMIN, Artem Sergeevich, Obninsk, Kaluzhskaya obl. 249037 (RU)
(74) Representative: Mitev, Mitko Karushkov
(86) International application number: PCT/RU2015/000365
(87) International publication number: WO 2015/190953

(57) **Abstract**

This invention relates to nuclear power engineering and may be used in power plants with liquid metal lead containing coolants, particularly in fast neutron reactors.

The invention helps improve the safety of nuclear power plants. For this purpose, a nuclear power plant is proposed comprising:
a reactor vessel with central and peripheral sections;
a reactor cavity with a core located in the central part of the vessel;
liquid metal coolant,
at least one circulation pump for circulating the liquid metal coolant and at least one steam generator, located in the peripheral section of the vessel;
a cavity with shielding gas located above the coolant;
at least one shielding gas dispenser located in the peripheral section of the vessel, above the top cut of the steam generator in the suction area of the circulating pump comprising an intake and working sections, with the intake section located in the shielding gas cavity and having openings in its upper part, and the working section located under the free level of the liquid metal coolant.

## Description

The invention relates to nuclear power and may be used in power plants with lead containing liquid metal coolants, particularly in fast neutron reactors, the first circuit of which uses heavy liquid metal coolants, such as eutectic alloy 44.5%Pb-55.5%Bi and lead, respectively.

Nuclear plants with lead coolants or lead coolant alloys generally contain a core located under the free coolant level, steam generators, coolant circulation facilities and a shielding gas system that includes a shielding gas device, a gas filter and a gas compressor (see T.Kh. Morgulova Nuclear Power Plants. Moscow: Vysshaya Shkola, 1984, p.251).

All liquid metal coolants are highly corrosive with regard to structural materials of a nuclear plant.

Therefore, the main tasks arising in the use of lead-containing liquid metal coolants are as follows:
- to create conditions that would prevent corrosion of structural materials of the first circuit in contact with the lead-containing liquid metal coolant;
- to ensure the necessary surface cleanliness for the first circuit (eliminate all deposits on the structural materials of the circulation circuit equipment that might affect the thermal hydraulic characteristics of the first circuit and the safety of the reactor facility);
- to ensure the required cleanliness of the first circuit gas system (eliminate all deposits in the gas system) and the cleanliness of the shielding gas.

The interface between the coolant section and the shielding gas is characterized by a constant mass transfer between the lead-containing liquid metal coolant and impurities found in the shielding gas (hydrogen, water vapor, oxygen, etc.), which may lead to both coolant quality fluctuations and changes in impurity composition of the shielding gas.

Simultaneously, the coolant component evaporation processes, the formation of aerosol particles and mechanical entrainment of dispersed impurities from the melt surface occur at the interface between the coolant and the shielding gas and in close proximity to the interface on the shielding gas side. These processes may result in contamination of the shielding gas and formation of deposits in the gas system of the first circuit.

In this case, the contents of the main impurities in the shielding gas of the first circuit shall not exceed:
- moisture contents: *C*_{*H*₂*O*} <0.5 mg/l (dew point of minus 26°C);
- oxygen content: *C*_{*O*₂} <5·10-3 vol.% (the oxygen sensor readings at level E of minus 400 to minus 450 mV);
- nitrogen content: *C_{N₂}* <5·10-3 vol.%

The composition of the first circuit shielding gas is monitored by the shielding gas oxygen and hydrogen level sensors and by chromatography through periodic gas sampling.

During hot operational testing of the first circuit, the shielding gas primarily consists of the highest grade argon.

The shielding gas device is designed to create a two-phase gas-liquid mixture of the coolant and the gas injected into the coolant with the required dispersion of gas bubbles and their subsequent transport along the circulation circuit of the coolant. The device is used in lead-bismuth coolant systems of nuclear plants for process modes involving the use of gas mixtures supplied to under the coolant level:
- hydrogen-based cleaning of the coolant and the first circuit;
- periodic cleaning of the first circuit to remove any products of reactions between the coolant and the structural steel;
- shielding gas purification and gas system cleaning to remove aerosols and fine particles of oxides of structural steel elements;

In various nuclear power plants, different shielding gas device arrangements are used.

A nuclear plant exists comprising a reactor with a liquid metal lead coolant or its alloys, a core located under the free coolant level, steam generators, a main circulation pump with constant pressure pipes and a shielding gas system, with the gas mixture device ensuring shielding gas injection into the gas volume above the free coolant level. (Patent PM RF120275, 2012)

Another nuclear plant exists comprising a reactor with a heavy liquid metal coolant with its core located under the free coolant level, steam generators, reactor coolant pumps, a shielding gas system and a gas mixture device designed in the form of a rotary electric or turbine drive of a gas pressure chamber. The pressure chamber of the dispenser is mounted in the liquid metal coolant circulation loop and connected by gas ducts with the shielding gas system and the circulating liquid metal coolant. These gas ducts are routed in the shafts of the main circulation pumps (RF Patent 2339097, 2007)

The main disadvantages of this solution consist in the required introduction of a special element containing a pressure chamber into the radiation-hazardous high-temperature liquid metal circuit and the low degree of interior surface cleaning in the reactor circuit to remove oxide-based impurities deposited.

Another nuclear plant exists comprising a reactor with a liquid metal lead coolant or its alloys, with its reactor core located under the free coolant level, steam generators, circulation facilities and a gas mixture device designed in the form of one or more pipes with nozzles. (RF Patent 2192052, 2001)

The disadvantage of this solution consists in the complexity of gas mixture delivery to all surfaces of the reactor circuit due to the low nozzle flow rate. The diameter of the holes in the nozzles may not be less than 1.0-3.0 mm due to their possible clogging with impurities contained in the coolant. Therefore, the exhaust flow rate will not exceed 0.5 m/s, which is insufficient, especially in downward areas of the circuit, which would lead to low purification efficiency for removing deposited metal oxides contained in the coolant.

The designs of all known gas devices are complex and imply the arrangement of extended gas lines.

The common disadvantage of all the above nuclear plants and their constituent shielding gas devices is the inability to form a stable two-phase gas-liquid mixture of the coolant and the ejected gas with the desired dispersion of gas bubbles and ensuring their subsequent transportation along the coolant circuit.

The object of the present invention is to increase the operational safety of nuclear power plants by ensuring normalization of liquid metal coolant flow circulation, increasing its treatment efficiency to remove slag and the efficiency of metal surface cleaning to remove corrosion by increasing the volume of the fine gas phase and simplifying the shielding gas device design.

The technical result of the invention consists in creating the conditions for forming a stable two-phase gas-liquid mixture of the coolant and the gas with the desired dispersion of gas bubbles and ensuring subsequent transportation of the mixture along the coolant circulation circuit.

This technical result is achieved through the creation of a nuclear power plant, which includes:
a reactor vessel with central and peripheral sections;
a reactor cavity with a core located in the central part of the vessel;
liquid metal coolant,
at least one circulation pump for circulating the liquid metal coolant and at least one steam generator, both located in the peripheral section of the vessel;
a cavity with shielding gas located above the coolant;
at least one shielding gas device located in the peripheral section, above the top cut of the steam generator in the suction area of the circulating pump comprising an intake and working sections, with the intake section located in the shielding gas cavity and the working section located under the free level of the liquid metal coolant.

In particular embodiments of the invention, the specified technical result is achieved by the creation of a plant, in which the shielding gas device is a dispenser, with its working section designed as a combination of a lower rotating disc secured to the hollow shaft and an upper stationary disc located in the intake section. The two discs are installed with a clearance, with the rotating disk being hollow and having axial holes connected to the clearance between the discs and the lower disc cavity.

Preferably, the shielding gas device is connected to the motor mounted outside the cavity of the plant housing with the use of a magnetic coupling.

The above task may also be solved through the creation of a shielding gas device for the nuclear power plant, with the shielding gas device represented by a dispenser, with its working section designed as a combination of a lower rotating disc secured to the hollow shaft and an upper stationary disc located in the intake section. The two discs are installed with a clearance, with the rotating disk being hollow and having axial holes connected to the clearance between the discs and the lower disc cavity.

### INVENTION DISCLOSURE

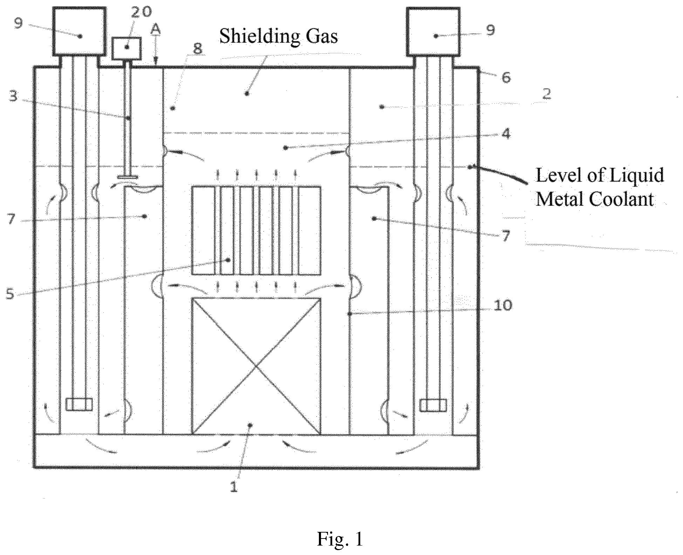

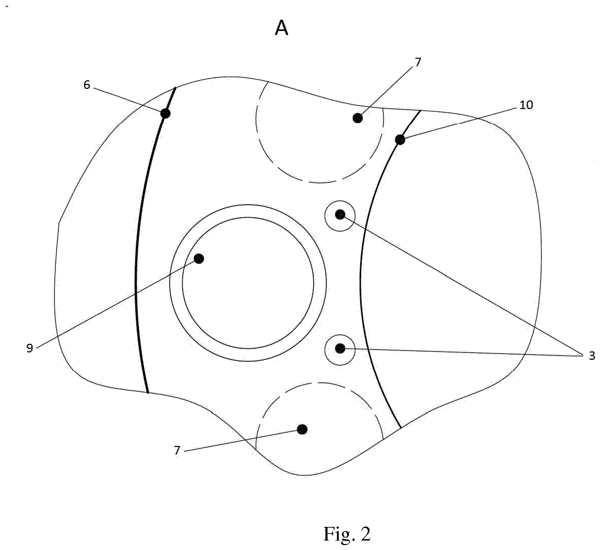

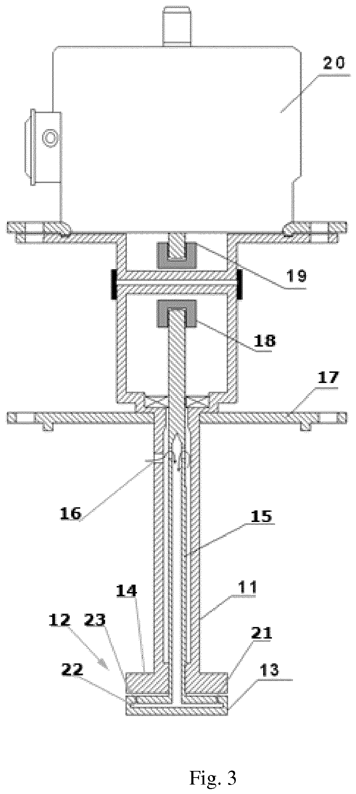

The invention is shown in Figures 1, 2 and 3.
Figure 1 shows the longitudinal axial section of one of the embodiments of the nuclear power plant.
Figure 2 is a plan view of a portion of the reactor facility at the location of the gas dispenser.
Figure 3 shows the shielding gas device;

The following notations designations are used in the figures:
- 1: - core;
- 2: - peripheral part of the vessel;
- 3: - shielding gas dispenser;
- 4: - liquid metal coolant;
- 5: - shielding plug;
- 6: - reactor vessel;
- 7: - steam generator;
- 8: - shielding gas cavity;
- 9: - circulation pump;
- 10: - reactor cavity;
- 11: - dispenser intake section;
- 12: - dispenser working section;
- 13: - lower rotating disc;
- 14: - upper stationary disc;
- 15: - hollow shaft;
- 16: - openings in dispenser intake section;
- 17: - dispenser mounting flange;
- 18: - driven magnetic coupling half;
- 19: - driving magnetic coupling half;
- 20: - sealed motor;
- 21: - axial openings in lower rotating disc;
- 22: - cavity in lower rotating disk;
- 23: - clearance between the discs

The nuclear power plant comprises a nuclear reactor with a liquid metal coolant (4), a reactor cavity (10) with a core (1) and a shielding plug (5), at least one steam generator (7), at least one circulation pump (9), a cavity (8) with the shielding gas, and at least one device for gas mixture injection into the liquid metal coolant loop (4).

The reactor cavity (10) with the core (1) is located in the central part of the reactor vessel (6) under the free level of the liquid metal coolant (4).

The steam generator (7) and the circulating pump (9) are located in the peripheral part (2) of the vessel (6) of the reactor plant.

The shielding gas cavity (8) is located above the level of the liquid metal coolant (4).

The device for gas mixture injection into the liquid metal coolant loop (4) is represented by a gas dispenser (3) located in the peripheral area of the vessel (6) above the top cut of the steam generator (7) in the suction area of the circulation pump (9).

The dispenser (3) has an intake section (11) with openings (16), a working section (12) with the lower rotating disc (13) secured to the hollow shaft (15) and the upper stationary disc (14) secured to or combined with the intake section (11).

The intake section (11) of the gas dispenser (3) with its openings (16) is located in the shielding gas cavity (8).

The dispenser (3) is secured to the liquid metal circuit using a flange (17).

The upper part of the gas dispenser (3) is connected to a sealed motor (20) mounted outside the cavity 6 in the reactor vessel with the use of a magnetic coupling, where no. 18 is the driving magnetic coupling half and no. 19 is the driven magnetic coupling half.

The lower rotating disk (13) has axial openings (21) located along its periphery and is hollow. (cavity (22))

The discs are installed with a clearance (23).

The working section (12) of the gas dispenser (3), designed in the form of a rotating disc (13) and a stationary disc (14), is located under the free level of the liquid metal coolant (4). This arrangement prevents shielding gas separation and directs the liquid metal coolant flow to the suction of the circulation pump (9).

The plant is operated as follows.

In the process of oxide removal from the liquid metal coolant and reactor circuit surfaces, the nuclear power plant is operated with the steam generators (7) drained, under isothermal conditions, at the minimum controlled power level (∼0.001%). The liquid metal coolant (4) is warmed by the circulating pumps (9) (due to pump blade friction against the liquid metal coolant (4)).

When the sealed motor (13) is activated, the lower disc (20) of the working section (12) of the dispenser (3) rotates at a predetermined angular velocity (n up to 3000 rpm). As a result of liquid metal coolant (13) motion relative to the lower disc (23), a low-pressure area is formed in the clearance, which induces injection of gas from the cavity (22) of the lower disc (13) through the openings (21) in the top of the lower disc (13) into the clearance (23).
Due to the velocity gradient of the liquid metal coolant, the bubbles in the clearance are fragmented and the finely-dispersed gaseous phase flows jointly with the coolant from the clearance (23) into the main flow of the lead-bismuth coolant (4).

Shielding gas injection into the flow of the liquid metal coolant (4) results in destruction of PbO-based slags and subsequent improvement of the physical and chemical properties of the liquid metal coolant (4).

The authors performed computational studies in relation to a nuclear power plant with a lead-bismuth coolant with two circulation pumps (9) and steam generators (7).

The total volumetric flow rate of the liquid metal coolant 4 at the suction of the circulation pump 9 amounts to 0.64 m³/s; the volumetric flow of the shielding gas (a mixture of H₂-H₂O-Ar) is 0,00008 m³/s; the temperature of the liquid metal coolant 4 is 400 to 450°C.

The duration of shielding gas supply to the liquid metal coolant flow (4) is 168 hours.

It is shown that injection of the shielding gas results in its efficient delivery to the PbO-based slag and their complete (100%) destruction with subsequent removal of the slag from the liquid metal coolant and normalization of its circulation.

This increases the safety of the nuclear power plant by ensuring normalization of liquid metal coolant circulation, more efficient removal of slags from the coolant and better removal of corrosion from metal surfaces.

## Claims

1. A nuclear power plant comprising:
a reactor vessel with central and peripheral sections;
a reactor cavity with a core located in the central part of the vessel;
liquid metal coolant,
at least one circulation pump for circulating the liquid metal coolant and at least one steam generator, located in the peripheral section of the vessel;
a cavity with shielding gas located above the coolant;
at least one shielding gas dispenser located in the peripheral section of the vessel, above the top cut of the steam generator in the suction area of the circulating pump comprising an intake and working sections, with the intake section located in the shielding gas cavity and having openings in its upper part, and the working section located under the free level of the liquid metal coolant.

2. The plant according to claim 1, in which the shielding gas device is a dispenser, with its working section designed as a combination of a lower rotating disc secured to the hollow shaft and an upper stationary disc located in the intake section. The two discs are installed with a clearance, with the movable disk being hollow and having axial holes connected to the clearance between the discs and the lower disc cavity.

3. The plant according to claim 1, with the shielding gas device connected to the motor mounted outside the cavity of the plant housing with the use of a magnetic coupling.

4. A shielding gas device for the nuclear power plant, with the shielding gas device represented by a dispenser, with its working section designed as a combination of a lower rotating disc secured to the hollow shaft and an upper stationary disc located in the intake section. The two discs are installed with a clearance, with the movable disk being hollow and having axial holes connected to the clearance between the discs and the lower disc cavity.
